# EUROPÄISCHE PATENTSCHRIFT

(11) **EP 3 390 130 B1**
(45) Veröffentlichungstag und Bekanntmachung des Hinweises auf die Patenterteilung: **06.05.2020**
(21) Anmeldenummer: 16801235.9
(22) Anmeldetag: 24.11.2016
(51) Int. Cl.: B60K 15/03, G01F 23/14

(54) **SYSTEM ZUR FÜLLSTANDSBESTIMMUNG**
SYSTEM FOR DETERMINING A FILLING LEVEL
SYSTÈME DE DÉTERMINATION DE NIVEAU

(30) Priorität: 17.12.2015 DE 102015225754
(43) Veröffentlichungstag der Anmeldung: 24.10.2018
(73) Patentinhaber: Continental Automotive GmbH, 30165 Hannover (DE)
(72) Erfinder: WEIGL, Manfred, 93161 Sinzing (DE); SCHÜLE, Harry, 92431 Neunburg V. Wald (DE); CHARMPA, Lamproula, 93047 Regensburg (DE)
(86) Internationale Anmeldenummer: PCT/EP2016/078732
(87) Internationale Veröffentlichungsnummer: WO 2017/102281

(56) Entgegenhaltungen:
- EP-A1- 0 503 279
- DE-A1- 1 931 583
- DE-A1- 19 750 620

## Beschreibung

Die Erfindung betrifft ein System zur Füllstandsbestimmung eines in einem Kraftstofftank befindlichen Kraftstoffs.

Zur Verringerung der von Kraftfahrzeugen ausgehenden Schadstoffemissionen wurden in den vergangenen Jahrzehnten zahlreiche Maßnahmen eingeführt. Eine dieser Maßnahmen besteht darin, ein Kraftstofftanksystem einzusetzen, bei dem ein Kraftstofftank mit einem Speicherelement zur temporären Speicherung von Kohlenwasserstoffen verbunden ist. Bei der Betankung von Kraftfahrzeugen mit Kraftstoffen kommt es zum Ausgasen von Kohlenwasserstoffen aus dem Kraftstoff, wobei die Kohlenwasserstoffe nicht in die Atmosphäre gelangen sollen. Auch bei hohen Temperaturen oder Fahrten über unebene Untergründe kommt es verstärkt zu Ausgasungen von Kohlenwasserstoffen aus dem Kraftstoff, wobei effektiv dafür gesorgt werden muss, dass diese Kohlenwasserstoffe nicht in die Atmosphäre entweichen. Insbesondere bei Hybridfahrzeugen, bei denen der Verbrennungsmotor über weite Fahrstrecken vollständig still steht, müssen ausgegaste Kohlenwasserstoffe effektiv zwischengespeichert, um später bei einem erneuten Starten des Verbrennungsmotors verbrannt zu werden. Hierzu haben sich Kraftstofftanksysteme bewährt, die aus einem Kraftstofftank und einem Speicherelement zur temporären Speicherung von Kohlenwasserstoffen bestehen, wobei der Kraftstofftank und das Speicherelement derart miteinander verbunden sind, dass die Kohlenwasserstoffe, die aus einem im Kraftstofftank befindlichen Kraftstoff ausgasen, im dem Speicherelement eingespeichert werden, wobei das Speicherelement mit einer ersten Leitung verbunden ist, durch die Frischluft zu dem Speicherelement förderbar ist und das Speicherelement mit einer zweiten Leitung verbunden ist, die das Speicherelement mit einer Ansaugleitung verbindet und durch die mit Kohlenwasserstoffen angereicherten Frischluft aus dem Speicherelement zu der Ansaugleitung förderbar ist. Auf diese Art und Weise kann das Speicherelement zyklisch mit Frischluft gespült werden und die eingespeicherten Kohlenwasserstoffe können einer Ansaugleitung zugeführt werden, die den Verbrennungsmotor mit dem Luftfilter verbindet und die den Verbrennungsmotor mit Luft zur Verbrennung versorgt. Damit können die aus dem Kraftstofftank ausgegasten Kohlenwasserstoffe in dem Verbrennungsmotor verbrannt werden und ein Entweichen der Kohlenwasserstoffe in die Atmosphäre wird sicher verhindert. Um eine fehlerfreie Funktion des Kraftstofftanksystems zu gewährleisten, ist es notwendig, die Dichtheit des gesamten Kraftstofftanksystems regelmäßig zu überprüfen. Diese Dichtheitsüberprüfung kann nicht auf Werkstattaufenthalte des Kraftfahrzeuges beschränkt werden, sondern die Dichtheitsüberprüfung muss im Fahrzeug, also On Board, im Rahmen des gesamten Fahrbetriebes des Kraftfahrzeuges erfolgen. Dazu werden im Kraftfahrzeug ein System aus Luftpumpen, Drucksensoren und Ventilen verbaut, die die Dichtheit des Kraftstofftanksystems on Board überprüfen können.

Systeme zur Füllstandsbestimmung von in Tanks befindlichen Flüssigkeiten sind seit geraumer Zeit bekannt. In der Regel werden Schwimmer eingesetzt, die auf der Flüssigkeit, deren Füllstand im Tank zu bestimmunen ist, aufschwimmen und die mit einer Sensorik verbunden sind, die die Position des Schwimmers erfasst, wodurch der Füllstand der Flüssigkeit im Tank bestimmt wird. Diese Systeme bestehen aus einer Anzahl von Komponenten, die Kosten verursachen, Störungen aufweisen können und zusätzliches Gewicht in den Tank bzw. das Tanksystem einbringen.

Aus der EP 0503 279 A1 ist eine Vorrichtung zum Messen des Anteils flüssigen Brennstoffs in einem Tank bekannt . Nach einer erfolgten Messung und bei zur Atmosphäre geöffnetem Tank wird ein Membranraum zum Tank verschlossen und zu einer Brennstoff-Förderpumpe geöffnet, so dass die Membran gegen die Kraftwirkung der Feder bis in die definierte Stellung verschoben wird durch den unter Druck in dem Membranraum strömenden Brennstoff, der bei erneuter Messung und zur Brennstoff-Förderpumpe verschlossenen und zum Tank geöffneten Membranraum bei zur Atmosphäre verschlossenen Tank in den Tank gefördert wird.

Aus der gattungsgemäßen DE 1 931 583 A1 ist eine Einrichtung zum kontinuierlichen Messen des Füllgrades eines Behälters bekannt.

Eine Aufgabe der vorliegenden Erfindung ist es daher, ein kostengünstiges System zur Füllstandsbestimmung für einen in einem Kraftstofftank befindlichen Kraftstoff anzugeben.

Die Aufgabe wird durch ein Kraftstofftanksystem nach dem unabhängigen Vorrichtungsanspruch 1 sowie durch das erfindungsgemäße Verfahren nach Anspruch 5 gelöst.

Dadurch, dass das System eine elektromotorisch angetriebene Luftpumpe, mindestens ein Ventil, einen Drucksensor, ein Steuergerät und ein Zeitmesselement aufweist, wobei das Steuergerät das Ventil derart ansteuert, dass der Kraftstofftank druckdicht verschlossen ist und das Steuergerät die Luftpumpe derart ansteuert, dass sich der Druck im Kraftstofftank so lange erhöht bis eine obere Schwelle erreicht ist und das Zeitmesselement die Zeit bestimmt bis der Druck die obere Schwelle erreicht hat und aus der Zeit bis zum Erreichen der oberen Schwelle den Füllstand des in dem Kraftstofftank befindlichen Kraftstoffs bestimmt, sind keine weiteren Bauteile wie zum Beispiel Schwimmer oder Positionssensoren notwendig, um den Füllstand zu erfassen. Das System zur Füllstandsbestimmung kann daher kostengünstig dargestellt werden. Dieselben Vorteile gelten für die erfindungsgemäße Verfahrensweise, bei der ein System zur Füllstandsbestimmung eine elektromotorisch angetriebene Luftpumpe, mindestens ein Ventil, einen Drucksensor, ein Steuergerät und einen Zeitmesselement aufweist, wobei ein Steuergerät das Ventil derart ansteuert, dass der Kraftstofftank druckdicht verschlossen wird, woraufhin das Steuergerät die Luftpumpe derart ansteuert, dass der Druck im Kraftstofftank so lange erhöht wird bis eine obere Schwelle erreicht ist und das Zeitmesselement die Zeit bestimmt bis der Druck die obere Schwelle erreicht hat und aus der Zeit bis zum Erreichen der oberen Schwelle der Füllstand des in dem Kraftstofftank befindlichen Kraftstoffs bestimmt wird. Erfindungsgemäß steuert das Steuergerät die Luftpumpe zu jeder Füllstandsbestimmung in demselben Arbeitspunkt an. Diese Maßnahme führt zu einer sehr guten Reproduzierbarkeit der Füllstandsbestimmung und zu genauen Messergebnissen.

Bei einer Weiterbildung beginnt das Zeitmesselement die Zeitmessung, wenn der der Druck im Kraftstofftank eine untere Schwelle überschritten hat. Damit ist ein genau definierter Startpunkt für die Zeitmessung festgelegt, was zu sehr genauen Messergebnissen führt.

Bei einer Weiterbildung der Erfindung weist das System einen Temperatursensor auf, mit dessen Messwerten die Füllstandsbestimmung um einen Temperaturkoeffizienten korrigiert wird. Die bekannten physikalischen Zusammenhänge zwischen Gasdruck, Gastemperatur und Gasvolumen können hier genutzt werden, um anhand der Zeitmesswerte bei veränderlicher Temperatur genaue Aussagen über den Anteil des Gasvolumens und damit des Kraftstofffüllstandes zu machen.

Bei einer nächsten Weiterbildung weist das System einen Umgebungsdrucksensor auf, mit dessen Messwerten die Füllstandsbestimmung um einen Umgebungsdruckkoeffizienten korrigiert wird. Auch der Umgebungsdruck kann die Genauigkeit der Füllstandsbestimmung beeinflussen und dies kann durch eine entsprechende Korrektur ausgeglichen werden.

Eine vorteilhafte Ausführungsform der Erfindung wird anhand der Figur beschrieben.
- Figur 1: zeigt einen Verbrennungsmotor mit Kraftstofftanksystem,
- Figur 2: zeigt ein Druck - Zeit Diagramm,
- Figur 3: zeigt die Druckanstiegszeiten.

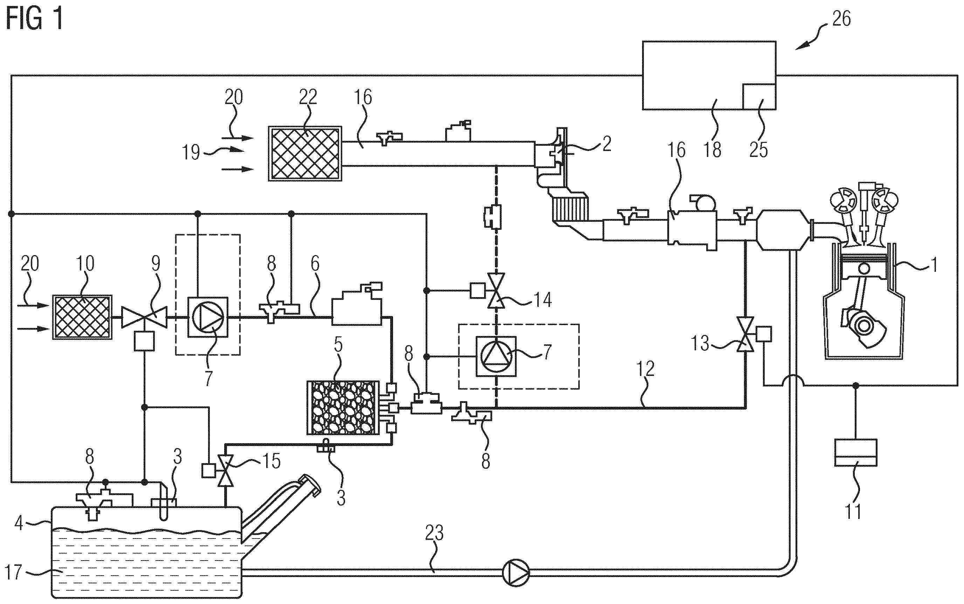

Fig. 1 zeigt einen Verbrennungsmotor 1. Der Verbrennungsmotor 1 wird über eine Ansaugleitung 16 mit Frischluft 20 versorgt. Ausgehend von der Frischluftseite 19 wird Frischluft 20 über einen Luftfilter 22 in die Ansaugleitung 16 geführt und eventuell mit einem Abgasturbolader 2 oder einem Kompressor verdichtet und dann den Brennkammern des Verbrennungsmotors 1 zugeführt. Darüber hinaus wird dem Verbrennungsmotor 1 Kraftstoff 17 aus dem Kraftstofftank 4 über eine Kraftstoffleitung 23 zugeführt. Fig. 1 zeigt weiterhin das Kraftstofftanksystem 26 mit einem Kraftstofftank 4 und einem Speicherelement 5 zur temporären Speicherung von Kohlenwasserstoffen. Der Kraftstofftank 4 und das Speicherelement 5 sind derart miteinander verbunden, dass die Kohlenwasserstoffe, die aus einem im Kraftstofftank 4 befindlichen Kraftstoff 17 ausgasen, in dem Speicherelement 5 eingespeichert werden können. Das Speicherelement 5 kann beispielsweise als Aktivkohlespeicher ausgebildet sein. Ein Aktivkohlespeicher ist ein geschlossener Kanister, in dem Kohlenstoff derart angeordnet ist, dass sich an dem Kohlenstoff die zu speichernden Kohlenwasserstoffe anlagern. Das Speicherelement 5 hat jedoch eine begrenzte Speicherkapazität, so dass das Speicherelement 5 regelmäßig entleert werden muss, indem Frischluft 20 z. B. über einen Spülluftfilter 10 angesaugt wird und über eine erste Leitung 6 mithilfe einer Luftpumpe 7 in das Speicherelement 5 gedrückt wird. Die Frischluft 20 durchströmt die Aktivkohle in dem Speicherelement 5 und nimmt dabei Kohlenwasserstoffe auf, wonach die mit den Kohlenwasserstoffen angereicherte Frischluft 20 entlang einer zweiten Leitung 12 zu der Ansaugluftleitung 16 gefördert wird. In der Ansaugluftleitung 16 vermischt sich die mit den Kohlenwasserstoffen angereicherte Frischluft 20 mit der Frischluft 20, die über den Luftfilter 22 angesaugt wird. Damit können die Kohlenwasserstoffe 24 dem Verbrennungsmotor 1 zugeführt werden, wo die Kohlenwasserstoffe in den Brennkammern des Verbrennungsmotors 1 verbrannt werden. Da das Kraftstofftanksystem 26 leicht flüchtige Kohlenwasserstoffe beinhaltet, ist es notwendig, die Dichtheit des Kraftstofftanksystems 26 regelmäßig zu überprüfen.

Das in Fig. 1 dargestellte Kraftstofftanksystem 26 weist zur Überprüfung der Dichtheit ein erstes Ventil 9 auf, das in der ersten Leitung 6 in Richtung des Frischluftstroms vor dem Speicherelement 5 angeordnet ist. Zwischen dem ersten Ventil 9 und dem Speicherelement 5 ist eine Luftpumpe 7 angeordnet und in einer zweiten Leitung 12 zwischen dem Speicherelement 5 und der Ansaugleitung 16 ist ein zweites Ventil 13 angeordnet. Zur Überprüfung der Dichtheit des Kraftstofftanksystems 26 kann zum Beispiel das erstes Ventil 9, das in der ersten Leitung 6 angeordnet ist, geöffnet werden und das zweite Ventil 13 kann geschlossen werden. Ein hier eingezeichnetes viertes Ventil 15 muss geöffnet sein, während das optional vorhandene dritte Ventil 14 geschlossen sein muss. Dann wird mit der Luftpumpe 7 ein Überdruck im Kraftstofftank 4 aufgebaut, der mit dem Drucksensor 8 beobachtet werden kann. Der Drucksensor 8 kann dabei zum Beispiel im Kraftstofftank 4, in der ersten Leitung 6 und/oder in der zweiten Leitung 12 angeordnet sein. Nach dem Erreichen eines vorbestimmten Überdruckes kann auch das erste Ventil 9 geschlossen werden und die zeitliche Entwicklung des Überdruckes im Kraftstofftank 4 kann mit dem Drucksensor 8 verfolgt werden. Dazu ist in einem Steuergerät 18 ein Zeitmesselement 25 ausgebildet. Fällt der Überdruck im Kraftstofftank 4 schnell ab, kann auf ein Leck im Kraftstofftanksystem 26 geschlossen werden. Der Gradient des Druckabfalls lässt einen Rückschluss auf die Größe des Lecks zu. Das Steuergerät 18 ist mittels elektrischer Leitungen mit den Antrieben des ersten Ventils 9, des zweiten Ventils 13, des dritten Ventils 14 und vierten Ventils 15, sowie den Drucksensoren 8, der Luftpumpe 7, dem Umgebungsdrucksensor 11 und dem Temperatursensor 3 verbunden.

Darüber hinaus kann mit dem in Figur 1 dargestellten System eine Füllstandsbestimmung des in dem Kraftstofftank 4 befindlichen Kraftstoffs 17 durchgeführt werden. Dazu werden das zweite Ventil 13 und das optional vorhanden dritte Ventil 14 geschlossen, damit der Kraftstofftank 4 druckdicht verschlossen ist. Das erste Ventil 9 und das vierte Ventil 15 werden hingegen geöffnet, damit mit der Luftpumpe 7 Frischluft in den Kraftstofftank 4 gepresst werden kann. Das Steuergerät 18 steuert die Luftpumpe 7 derart an, dass sich der Druck im Kraftstofftank 4 so lange erhöht bis eine obere Schwelle 24 erreicht ist. Das Zeitmesselement 25 bestimmt die Zeit bis der Druck die obere Schwelle 24 erreicht hat und aus der Zeit bis zum Erreichen der oberen Schwelle 25 kann das Steuergerät 18 den Füllstand des in dem Kraftstofftank 4 befindlichen Kraftstoffs 17 bestimmen. Das Zeitmesselement 25 beginnt vorteilhafter Weise mit der Zeitmessung, wenn der der Druck im Kraftstofftank 4 eine untere Schwelle 21 überschritten hat. Zur besseren Auswertbarkeit der der Zeitmessung steuert das Steuergerät 18 die Luftpumpe zu jeder Füllstandsbestimmung in dem Selben Arbeitspunkt an. Zum Beispiel beim Einsatz einer elektromotorisch angetriebenen Radialpumpe wäre der Arbeitspunkt eine genau definierte Drehzahl, mit der die Luftpumpe 7 für jede Füllstandsbestimmung immer wieder betrieben wird. Elektromotorisch angetriebene Radialpumpen können Drehzahlen von 60 000 Umdrehungen pro Minute erreichen. Ein vorteilhafter Arbeitspunkt wäre zum Beispiel eine Drehzahl von 25 000 Umdrehungen pro Minute. Die als elektromotorisch angetriebene Radialpumpe ausgebildete Luftpumpe 7 wird im Rahmen dieses Beispiels für jede Füllstandsbestimmung mit einer Drehzahl von 25 000 Umdrehungen pro Minute angetrieben. Damit sind genau definierte Randbedingungen hergestellt, die für eine reproduzierbare und fehlerfreie Füllstandsbestimmung vorteilhaft sind.
Weiterhin ist in der Figur 1 einen Temperatursensor erkennbar, mit dessen Messwerten die Füllstandsbestimmung um einen Temperaturkoeffizienten korrigiert werden kann. Die allgemein bekannten Zusammenhänge zwischen Gasdruck, Gastemperatur und Gasvolumen können hierbei zur Füllstandsbestimmung des in dem Kraftstofftank 4 befindlichen Kraftstoffs 17 herangezogen werden, da der Kraftstofftank 4 zum einen Teil mit dem Gasvolumen und zum anderen Teil mit dem Kraftstoffvolumen ausgefüllt ist. Zudem weist das System einen Umgebungsdrucksensor 11 auf, mit dessen Messwerten die Füllstandsbestimmung um einen Umgebungsdruckkoeffizienten korrigiert werden kann.

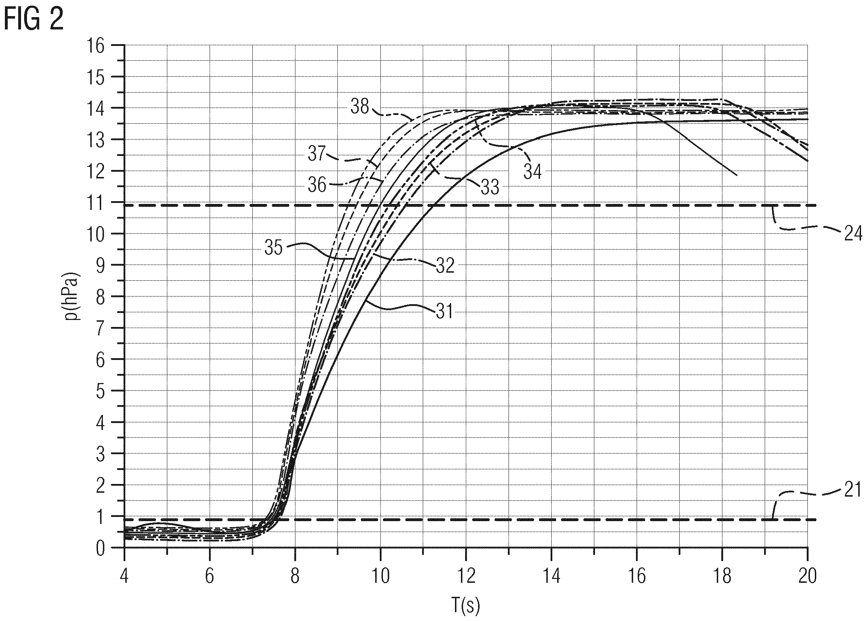

Figur 2 zeigt ein Druck P - Zeit T Diagramm. Der Druck P ist in hPa angegeben und die Zeit T in s. Im Druck P - Zeit T Diagramm finden sich eine erste Druckkurve 31, eine zweite Druckkurve 32, eine dritte Druckkurve 33, eine vierte Druckkurve 34, eine fünfte Druckkurve 35, eine sechste Druckkurve 36, eine siebente Druckkurve 37 und eine achte Druckkurve 38. Die Druckkurven 31 bis 38 steigen unterschiedlich schnell an und repräsentieren jeweils unterschiedliche Tankfüllstände. Gemessen wird die Zeit die benötigt wird, um eine vorher festgelegt obere Druckschwelle 24 zu erreichen. Dabei ist es vorteilhaft, wenn die Luftpumpe 7 bei jeder Messung immer in ein und demselben Arbeitspunkt arbeitet. Um möglichst vergleichbare Ausgangsbedingungen festzulegen, kann die Zeitmessung vorteilhafter Weise dann gestartet werden, wenn im Kraftstofftank 4 eine vorher bestimmte untere Druckschwelle 21 überschritten wurde. Bei der ersten Druckkurve 31 ist zu erkennen, dass die meiste Zeit vergeht bis der Druck von der unteren Druckschwelle 21 zur oberen Druckschwelle 24 gestiegen ist. Damit musste das größte gasförmige Volumen im Kraftstofftank 4 gefüllt werden und die erste Druckkurve 31 repräsentiert damit den geringsten Kraftstofffüllstand im Kraftstofftank 4. Bei der achten Druckkurve 38 hingegen ist zu erkennen, dass die geringste Zeit vergeht bis der Druck von der unteren Druckschwelle 21 zur oberen Druckschwelle 24 gestiegen ist. Damit musste das kleinste gasförmige Volumen im Kraftstofftank 4 gefüllt werden und die achte Druckkurve 31 repräsentiert damit den größten Kraftstofffüllstand im Kraftstofftank 4.

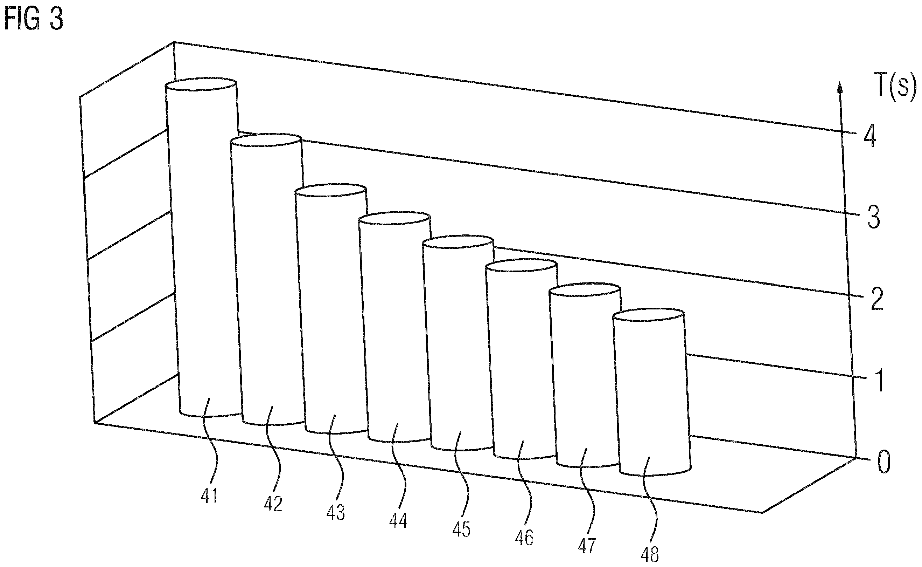

Figur 3 zeigt die Druckanstiegszeiten für die acht aus Figur 3 bekannten Druckkurven.

Die erste Druckkurve 31 benötigt eine erste Druckanstiegszeit 41 von 3,69 s, was einem Füllstand von nur 5 Litern Kraftstoff im Kraftstofftank entspricht.

Die zweite Druckkurve 32 benötigt eine zweite Druckanstiegszeit 42 von 3,31 s, was einem Füllstand von 15 Litern Kraftstoff im Kraftstofftank entspricht.

Die dritte Druckkurve 33 benötigt eine dritte Druckanstiegszeit 43 von 2,65 s, was einem Füllstand von 25 Litern Kraftstoff im Kraftstofftank entspricht.

Die vierte Druckkurve 34 benötigt eine vierte Druckanstiegszeit 44 von 2,39 s, was einem Füllstand von 30 Litern Kraftstoff im Kraftstofftank entspricht.

Die fünfte Druckkurve 35 benötigt eine fünfte Druckanstiegszeit 45 von 2,21 s, was einem Füllstand von 35 Litern Kraftstoff im Kraftstofftank entspricht.

Die sechste Druckkurve 36 benötigt eine sechste Druckanstiegszeit 46 von 2,01 s, was einem Füllstand von 40 Litern Kraftstoff im Kraftstofftank entspricht.

Die siebente Druckkurve 37 benötigt eine siebente Druckanstiegszeit 47 von 1,84 s, was einem Füllstand von 45 Litern Kraftstoff im Kraftstofftank entspricht.

Die achte Druckkurve 38 benötigt eine achte Druckanstiegszeit 48 von 1,6 s, was einem Füllstand von 50 Litern Kraftstoff im Kraftstofftank entspricht.

Damit ist eine eindeutige Zuordnung der der gemessenen Zeit, die zum Aufbau eines vorher bestimmten Druckes im Kraftstofftank 4 notwendig ist, zu dem im Kraftstofftank vorhandenen Füllstand möglich.

## Patentansprüche

1. System zur Füllstandsbestimmung eines in einem Kraftstofftank befindlichen Kraftstoffs, **wobei** das System eine elektromotorisch angetriebene Luftpumpe (7), mindestens ein Ventil, einen Drucksensor, ein Steuergerät (18) und ein Zeitmesselement (25) aufweist, wobei das Steuergerät (18) das Ventil derart ansteuert, dass der Kraftstofftank druckdicht verschlossen ist und das Steuergerät die Luftpumpe derart ansteuert, dass sich der Druck im Kraftstofftank so lange erhöht bis eine obere Schwelle erreicht ist und das Zeitmesselement die Zeit bestimmt bis der Druck die obere Schwelle erreicht hat und aus der Zeit bis zum Erreichen der oberen Schwelle den Füllstand des in dem Kraftstofftank befindlichen Kraftstoffs bestimmt, **dadurch gekennzeichnet, dass** Frischluft (20) mithilfe der Luftpumpe (7) in ein zur temporären Speicherung von Kohlenwasserstoffen vorgesehenes Speicherelement (5) gedrückt wird, und dass das Steuergerät (18) die Luftpumpe (7) zu jeder Füllstandsbestimmung in demselben Arbeitspunkt ansteuert.

2. System zur Füllstandsbestimmung eines in einem Kraftstofftank befindlichen Kraftstoffs nach Anspruch 1, **dadurch gekennzeichnet, dass** das Zeitmesselement (25) die Zeitmessung beginnt, wenn der der Druck im Kraftstofftank eine untere Schwelle überschritten hat.

3. System zur Füllstandsbestimmung eines in einem Kraftstofftank befindlichen Kraftstoffs nach Anspruch 1 oder 2, **dadurch gekennzeichnet, dass** das System einen Temperatursensor aufweist, mit dessen Messwerten die Füllstandsbestimmung um einen Temperaturkoeffizienten korrigiert wird.

4. System zur Füllstandsbestimmung eines in einem Kraftstofftank befindlichen Kraftstoffs nach einem der vorgenannten Ansprüche, **dadurch gekennzeichnet, dass** das System einen Umgebungsdrucksensor aufweist, mit dessen Messwerten die Füllstandsbestimmung um einen Umgebungsdruckkoeffizienten korrigiert wird.

5. Verfahren zur Füllstandsbestimmung eines in einem Kraftstofftank befindlichen Kraftstoffs, wobei ein System zur Füllstandsbestimmung eine elektromotorisch angetriebene Luftpumpe (7), mindestens ein Ventil, einen Drucksensor, ein Steuergerät (18) und ein Zeitmesselement (25) aufweist, wobei das Steuergerät (18) das Ventil derart ansteuert, dass der Kraftstofftank druckdicht verschlossen wird, woraufhin das Steuergerät die Luftpumpe derart ansteuert, dass der Druck im Kraftstofftank so lange erhöht wird bis eine obere Schwelle erreicht ist und das Zeitmesselement die Zeit bestimmt bis der Druck die obere Schwelle erreicht hat und aus der Zeit bis zum Erreichen der oberen Schwelle der Füllstand des in dem Kraftstofftank befindlichen Kraftstoffs bestimmt wird, **dadurch gekennzeichnet, dass** Frischluft (20) mithilfe der Luftpumpe (7) in ein zur temporären Speicherung von Kohlenwasserstoffen vorgesehenes Speicherelement (5) gedrückt wird, und dass das Steuergerät (18) die Luftpumpe (7) zu jeder Füllstandsbestimmung in dem selben Arbeitspunkt ansteuert.

6. Verfahren zur Füllstandsbestimmung eines in einem Kraftstofftank befindlichen Kraftstoffs nach Anspruch 5, **dadurch gekennzeichnet, dass** das Zeitmesselement (25) die Zeitmessung beginnt, wenn der der Druck im Kraftstofftank eine untere Schwelle überschritten hat.

7. Verfahren zur Füllstandsbestimmung eines in einem Kraftstofftank befindlichen Kraftstoffs nach Anspruch 5 oder 6, **dadurch gekennzeichnet, dass** das System einen Temperatursensor aufweist, mit dessen Messwerten die Füllstandsbestimmung um einen Temperaturkoeffizienten korrigiert wird.

8. Verfahren zur Füllstandsbestimmung eines in einem Kraftstofftank befindlichen Kraftstoffs nach einem der vorgenannten Ansprüche 5 bis 7, **dadurch gekennzeichnet, dass** das System einen Umgebungsdrucksensor aufweist, mit dessen Messwerten die Füllstandsbestimmung um einen Umgebungsdruckkoeffizienten korrigiert wird.

## Claims

1. System for determining a filling level of a fuel situated in a fuel tank, wherein the system has an electromotively driven air pump (7), at least one valve, a pressure sensor, a control unit (18) and a timing element (25), wherein the control unit (18) actuates the valve such that the fuel tank is closed in pressure-tight fashion, and the control unit actuates the air pump such that the pressure in the fuel tank increases until an upper threshold is reached, and the timing element determines the time until the pressure has reached the upper threshold, and the filling level of the fuel situated in the fuel tank is determined from the time taken to reach the upper threshold, **characterized in that** fresh air (20) is forced into an accumulator element (5) provided for temporarily storing hydrocarbons by means of the air pump (7), and **in that** the control unit (18) actuates the air pump (7) at the same operating point for every determination of the filling level.

2. System for determining a filling level of a fuel situated in a fuel tank according to Claim 1, **characterized in that** the timing element (25) starts the timing when the pressure in the fuel tank has exceeded a lower threshold.

3. System for determining a filling level of a fuel situated in a fuel tank according to Claim 1 or 2, **characterized in that** the system has a temperature sensor, by means of the measurement values of which the determination of the filling level is corrected by a temperature coefficient.

4. System for determining a filling level of a fuel situated in a fuel tank according to one of the preceding claims, **characterized in that** the system has an ambient pressure sensor, by means of the measurement values of which the determination of the filling level is corrected by an ambient pressure coefficient.

5. Method for determining a filling level of a fuel situated in a fuel tank, wherein a system for determining the filling level has an electromotively driven air pump (7), at least one valve, a pressure sensor, a control unit (18) and a timing element (25), wherein the control unit (18) actuates the valve such that the fuel tank is closed in pressure-tight fashion, whereupon the control unit actuates the air pump such that the pressure in the fuel tank is increased until an upper threshold is reached, and the timing element determines the time until the pressure has reached the upper threshold, and the filling level of the fuel situated in the fuel tank is determined from the time taken to reach the upper threshold, **characterized in that** fresh air (20) is forced into an accumulator element (5) provided for temporarily storing hydrocarbons by means of the air pump (7), and **in that** the control unit (18) actuates the air pump (7) at the same operating point for every determination of the filling level.

6. Method for determining a filling level of a fuel situated in a fuel tank according to Claim 5, **characterized in that** the timing element (25) starts the timing when the pressure in the fuel tank has exceeded a lower threshold.

7. Method for determining a filling level of a fuel situated in a fuel tank according to Claim 5 or 6, **characterized in that** the system has a temperature sensor, by means of the measurement values of which the determination of the filling level is corrected by a temperature coefficient.

8. Method for determining a filling level of a fuel situated in a fuel tank according to one of the preceding Claims 5 to 7, **characterized in that** the system has an ambient pressure sensor, by means of the measurement values of which the determination of the filling level is corrected by an ambient pressure coefficient.

## Revendications

1. Système de détermination de niveau de remplissage d'un carburant dans un réservoir de carburant, le système comportant une pompe à air (7) entraînée par un moteur électrique, au moins une soupape, un capteur de pression, une unité de commande (18) et un élément de mesure de temps (25), l'unité de commande (18) commandant la soupape de sorte que le réservoir de carburant soit fermé de manière étanche à la pression et l'unité de commande commandant la pompe à air de sorte que la pression dans le réservoir de carburant augmente jusqu'à ce qu'un seuil supérieur soit atteint, et l'élément de mesure de temps déterminant le temps jusqu'à ce que la pression ait atteint le seuil supérieur et déterminant le niveau de remplissage du carburant dans le réservoir de carburant à partir de l'instant où le seuil supérieur est atteint, **caractérisé en ce que** de l'air frais (20) est comprimé à l'aide de la pompe à air (7) dans un élément de stockage (5) prévu pour stocker temporairement des hydrocarbures, et **en ce que** l'unité de commande (18) commande la pompe à air (7) à chaque fois que le niveau de remplissage est déterminé au même point de fonctionnement.

2. Système de détermination de niveau de remplissage d'un carburant dans un réservoir de carburant selon la revendication 1, **caractérisé en ce que** l'élément de mesure de temps (25) commence la mesure de temps lorsque la pression dans le réservoir de carburant a dépassé un seuil inférieur.

3. Système de détermination de niveau de remplissage d'un carburant dans un réservoir de carburant selon la revendication 1 ou 2, **caractérisé en ce que** le système comporte un capteur de température dont les valeurs de mesure viennent corriger la détermination de niveau de remplissage d'un coefficient de température.

4. Système de détermination de niveau d'un carburant dans un réservoir de carburant selon l'une des revendications précédentes, **caractérisé en ce que** le système comporte un capteur de pression ambiante dont les valeurs de mesure viennent corriger la détermination de niveau de remplissage d'un coefficient de pression ambiante.

5. Procédé de détermination de niveau de remplissage d'un carburant dans un réservoir de carburant, un système de détermination de niveau de remplissage comprenant une pompe à air (7) entraînée par un moteur électrique, au moins une soupape, un capteur de pression, une unité de commande (18) et un élément de mesure de temps (25), l'unité de commande (18) commandant la soupape de sorte que le réservoir de carburant soit fermé de manière étanche à la pression, après quoi l'unité de commande commande la pompe à air de sorte que la pression dans le réservoir de carburant soit augmentée jusqu'à ce qu'un seuil supérieur soit atteint et l'élément de mesure de temps déterminant le temps jusqu'à ce que la pression ait atteint le seuil supérieur, et le niveau de remplissage de carburant dans le réservoir de carburant étant déterminé à partir de l'instant où le seuil supérieur est atteint, **caractérisé en ce que** de l'air frais (20) est comprimé à l'aide de la pompe à air (7) dans un élément de stockage prévu pour stocker temporairement des hydrocarbures (5) et **en ce que** l'unité de commande (18) commande la pompe à air (7) à chaque fois que le niveau de remplissage est déterminé au même point de fonctionnement.

6. Procédé de détermination de niveau de remplissage d'un carburant dans un réservoir de carburant selon la revendication 5,
**caractérisé en ce que** l'élément de mesure de temps (25) commence à mesurer le temps lorsque la pression dans le réservoir de carburant a dépassé un seuil inférieur.

7. Procédé de détermination de niveau de remplissage d'un carburant dans un réservoir de carburant selon la revendication 5 ou 6, **caractérisé en ce que** le système comporte un capteur de température dont les valeurs de mesure viennent corriger la détermination de niveau de remplissage d'un coefficient de température.

8. Procédé de détermination de niveau de remplissage d'un carburant dans un réservoir de carburant selon l'une des revendications 5 à 7 précédentes, **caractérisé en ce que** le système comporte un capteur de pression ambiante dont les valeurs de mesure viennent corriger la détermination de niveau de remplissage d'un coefficient de pression ambiante.
